# EUROPÄISCHE PATENTSCHRIFT

(11) **EP 1 926 971 B1**
(45) Veröffentlichungstag und Bekanntmachung des Hinweises auf die Patenterteilung: **05.12.2012**
(21) Anmeldenummer: 06793725.0
(22) Anmeldetag: 21.09.2006
(51) Int. Cl.: G01F 1/56, G01N 27/90

(54) **VERFAHREN UND ANORDNUNG ZUR BERÜHRUNGSLOSEN INSPEKTION BEWEGTER ELEKTRISCH LEITFÄHIGER SUBSTANZEN**
METHOD AND ARRANGEMENT FOR THE CONTACTLESS INSPECTION OF MOVING ELECTRICALLY CONDUCTIVE SUBSTANCES
PROCEDE ET DISPOSITIF D'INSPECTION SANS CONTACT DE SUBSTANCES CONDUCTRICES MOBILES

(30) Priorität: 21.09.2005 DE 102005046910
(43) Veröffentlichungstag der Anmeldung: 04.06.2008
(73) Patentinhaber: Technische Universität Ilmenau, 98693 Ilmenau (DE)
(72) Erfinder: THESS, André, 01309 Dresden (DE); KOLESNIKOV, Yuri, LV-1010 Riga (LV); KARCHER, Christian, 98693 Ilmenau (DE)
(74) Vertreter: Engel, Christoph Klaus
(86) Internationale Anmeldenummer: PCT/EP2006/066605
(87) Internationale Veröffentlichungsnummer: WO 2007/033982

(56) Entgegenhaltungen:
- WO-A-00/58695
- JP-A- 7 181 195
- JP-A- 57 199 917
- US-A1- 2005 122 099
- THESS A ET AL: "Lorentz force velocimetry" Physical Review Letters APS USA, Bd. 96, Nr. 16, 28. April 2006 (2006-04-28), Seiten 164501/1-4, XP002414987 ISSN: 0031-9007

## Beschreibung

Die Erfindung betrifft ein Verfahren und eine Anordnung zur berührungslosen Bestimmung von Eigenschaften elektrisch leitfähiger, bewegter Substanzen, die fest oder flüssig sein können. Im bevorzugten Falle der Untersuchung flüssiger Substanzen werden diese während des Durchströmens eines Rohrs, Kanals öder ähnlichen Führungshilfsmittels als bewegte Substanz betrachtet. Die Erfindung betrifft auch ein Verfahren und eine Anordnung zur berührungslosen Bestimmung der räumlichen Verteilung der Eigenschaften solcher Substanzen, wie beispielsweise Strömungsgeschwindigkeit und elektrische Leitfähigkeit der Substanz. Die Erfindung ist insbesondere für die Strömungs- und Durchflussmessung in der Metallurgie anwendbar, eignet sich jedoch auch für Aufgaben der zerstörungsfreien Werkstoffprüfung. Die erfindungsgemäße Anordnung wird im Folgenden auch Lorentzk.raft-Anemometer genannt.

Die genaue Messung von Strömungsgeschwindigkeiten, Durchflussmengen und weiterer Eigenschaften, welche die elektrische Leitfähigkeit beeinflussen, ist beispielsweise für metallurgische Prozesse, für die Züchtung von Halbleiter-Einkristallen sowie für die Herstellung von Glas von großer Bedeutung. Die genannten Substanzen sind während des Schmelzprozesses heiß und aggressiv, weshalb berührungslose elektromagnetische Verfahren für solche Messaufgaben besonders geeignet sind.

Aus den Druckschriften DE 33 47 190 A1, DE 43 16 344 A1 DE 199 22 311 C2, DE 100 26 052 B4 sowie aus der Veröffentlichung "The use of magnetohydrodynamic effects to investigate fluid flow in electrically conducting melts" (J. Baümgartl, A. Hubert, G. Müller, Physics of Fluids, Band A 5, Jahrgang 1993, Seiten 3280-3289) sind berührungslose elektromagnetische Strömungsmessverfahren bekannt, bei denen ein Magnetfeld (das sogenannte Primärfeld) in die Substanz eingekoppelt wird und die von Wirbelströmen induzierte Magnetfeldstörung (das sogenannte Sekundärfeld) als Maß für die Strömungsgeschwindigkeit dient. Mit diesen Verfahren können sowohl mittlere Strömungsgeschwindigkeiten als auch räumliche Verteilungen der Strömungsgeschwindigkeit ermittelt werden, wobei im letzteren Fall die bekannte Methode der kleinsten Fehlerquadrate für die Ermittlung der Strömungsverteilung zur Anwendung kommt.

Diese vorbekannten Messverfahren besitzen jedoch drei wesentliche Nachteile. Erstens erlauben sie wegen ihrer begrenzten Empfincllichkeit nicht, Strömungsgeschwindigkeiten in sehr langsam fließenden oder sehr schwach elektrisch leitfähigen Substanzen wie beispielsweise Glasschmelzen zu messen. Zweitens wird die Messgenauigkeit der Systeme in einer elektromagnetisch gestörten Umgebung stark eingeschränkt, da die Magnetfeldsensoren aufgrund ihrer geringen räumlichen Ausdehnung bereits durch kleinste parasitäre Fluktuationen des Magnetfeldes beeinträchtigt werden. Drittens lässt sich die Messempfindlichkeit des Verfahrens, die durch das Verhältnis zwischen Sekundärfeld und Primärfeld charakterisiert ist, durch eine Erhöhung des Primärfeldes nicht vergrößern.

Die genannten Nachteile werden durch die in den Druckschriften JP 571 999 17 A, US 6 538 433 B1 und JP 071 811 95 A beschriebenen Verfahren nur teilweise überwunden. Diese sind dadurch gekennzeichnet, dass anstatt einer direkten Messung des Sekundärfeldes eine Messung der vom Sekundärfeld auf das magnetfelderzeugende System ausgeübten Kraft vorgenommen wird. Trotz ihrer Vorzüge gegenüber den erstgenannten Methoden sind die kraftmessenden Systeme jedoch für eine Reihe wichtiger Spezialaufgaben, unter anderem für die Durchflussmessung, nicht oder nur bedingt geeignet.

Bei dem in JP 571 999 17 A geschilderten Aufbau wird das magnetische Primärfeld von stromdurchflossenen Spulen erzeugt, die die zu vermessende Rohrströmung vollständig umschließen. Ein solches System ist sehr schwer, benötigt eine aufwändige Stromversorgung und kann nur nach kostspieliger Demontage der Messstrecke an einen anderen Einsatzort transportiert werden.

Bei den in den Schriften US 6 538 433 B1 und JP 071 811 95 A vorgestellten Systemen handelt es sich um lokale Sensoren, die die Strömungsgeschwindigkeit nur in ihrer unmittelbaren Umgebung messen können. Für die Bestimmung des Massenstroms oder des Volumenstroms - in der Fachsprache häufig als Durchflussmessung bezeichnet - sind diese lokalen Sensoren nicht geeignet, weil das von ihnen erzeugte Magnetfeld nur einen Teil des von der leitfähigen Substanz durchströmten Querschnitts durchdringt. Zudem sinkt die Messempfindlichkeit der lokalen Sensoren mit der dritten (bei größeren Entfernungen sogar mit der vierten) Potenz des Abstandes zur leitfähigen Substanz und ist deshalb für zahlreiche Anwendungsfälle nicht ausreichend.

Der vorliegenden Erfindung liegt somit die Aufgabe zugrunde, ein Verfahren und eine Anordnung zur berührungslosen Messung von die elektrische Leitfähigkeit beeinflussenden Merkmalen, wie beispielsweise Strömungsgeschwindigkeit und Durchflussmenge für elektrisch leitfähige Substanzen bereitzustellen, welche einerseits sehr hohe Messgenauigkeiten und Messempfindlichkeiten gestatten. Ein solches Verfahren soll außerdem einfach durchführbar sein. Eine entsprechende Anordnung soll kostengünstig und einfach umrüstbar aufgebaut sein. Es soll weiterhin die Bestimmung der räumlichen Verteilung der verschiedenen Eigenschaften, wie beispielsweise Strömungsgeschwindigkeit und Leitfähigkeit in der Substanz, oder auch die Bestimmung der Kontur der durchströmten Rinne (oder ähnliches) möglich sein.

Die vorliegende Erfindung soll außerdem die Identifikation zeitlich und räumlich lokalisierter Inhomogenitäten der elektrischen Leitfähigkeit, wie zum Beispiel Schlacketeilchen in einer Schmelze oder Risse in einem bewegten metallischen Bauteil, ermöglichen.

Die Gesamtheit der Messaufgaben, deren Ziel die Auffindung der Verteilungen insbesondere von Strömungsgeschwindigkeit und elektrischer Leitfähigkeit in einer elektrisch leitfähigen Substanz ist, wird im Folgenden unter dem Begriff Inspektion zusammengefasst.

Die genannten Aufgaben werden erfindungsgemäß durch die Merkmale der unabhängigen Ansprüche 1 und 10 gelöst, während den abhängigen Ansprüchen vorteilhafte Weiterbildungen der Erfindung zu entnehmen sind.

Die Vorteile der Erfindung sind insbesondere darin zu sehen, dass das magnetfelderzeugende System so flexibel konstruiert ist, dass es jederzeit abgenommen, umgesetzt und für andere Messaufgaben verwendet werden kann. Im Vergleich zu den existierenden stationären und die Substanz nur lokal abtastenden Sensoren ist bei der Erfindung eine verbesserte Ausnutzung der Magnetfeldlinien bei gleichzeitigem minimalen Einsatz magnetfelderzeugenden Materials als vorteilhaft heraus zustellen.

Bewegt sich eine elektrisch leitfähige Substanz relativ zu einem Magnetfeld, dem magnetischen Primärfeld, so rufen die in der Substanz induzierten Wirbelströme eine Magnetfeldstörung, das magnetische Sekundärfeld, hervor. Die Struktur des magnetischen Sekundärfeldes hängt von der Verteilung des magnetischen Primärfeldes sowie von den Verteilungen der Strömungsgeschwindigkeit (also von der Geschwindigkeit, mit welcher die Substanz ggf. partiell im Primärfeld bewegt wird) und der elektrischen Leitfähigkeit der Substanz ab.

Das magnetische Sekundärfeld übt auf ein, das Primärfeld erzeugendes Magnetsystem Kräfte und Drehmomente aus, die im Folgenden unabhängig von den physikalischen Details ihrer Entstehung als Lorentzkräfte bezeichnet werden.

Durch eine erfindungsgemäße Messung der Wirkungen dieser Lorentzkräfte auf das Magnetsystem ist es nun möglich, Aussagen über die Strömungsgeschwindigkeit und die elektrische Leitfähigkeit der Substanz zu erhalten.

Aufgrund der zentralen Rolle der Lorentzkraft wird die vorgestellte erfindungsgemäße Anordnung als Lorentzkraft-Anemometer bezeichnet.

Das Lorentzkraft-Anemometer umfasst ein Magnetsystem mit mindestens zwei magnetischen Polen (NORD und SÜD)zur Erzeugung des Primärfeldes. Die Pole sind vorzugsweise an im Wesentlichen gegenüberliegenden Seiten des Querschnitts einer zu inspizierenden Substanz angeordnet. Die Substanz wird also im Luftspalt des Magnetsystems angeordnet. Durch diese Anordnung wird sichergestellt, dass das Primärfeld bzw. die im Luftspalt zwischen NORD und SÜD verlaufenden Feldlinien den gesamten Querschnitt der Substanz durchdringen und somit die Voraussetzung für eine vollständige Bestimmung der räumlichen Verteilung von Strömungsgeschwindigkeit und elektrischer Leitfähigkeit schafft.

In einer besonders vorteilhaften Ausführungsform sind die Pole bzw. das Magnetsystem vom Lorentzkraft-Anemometer abnehmbar. Die Abnehmbarkeit ermöglicht einen flexiblen Einsatz der Anordnung. Einerseits kann das LorentzkraftAnemometer leicht an verschiedene auszumessende Anordnungen angebracht werden, andererseits ist dadurch eine einfache Konfektionierung des Lorentzkraft-Anemometers für verschiedene Einsatzbedingungen möglich.

Ein an das Magnetsystem gekoppeltes Aktuatorsystem erlaubt eine gezielte Einstellung mindestens einer Größe des magnetischen Primärfeldes.

Die Variation mindestens einer Größe des magnetischen Primärfeldes, die im Folgenden als Steuergröße bezeichnet wird, dient dem Zweck, die Magnetfeldlinien auf bestimmte Teilgebiete der zu inspizierenden Substanz zu konzentrieren und somit die Verteilung von Strömungsgeschwindigkeit und elektrischer Leitfähigkeit scannen zu können.

Das von dem Magnetsystem erzeugte magnetische Primärfeld kann erfindungsgemäß sowohl als Gleichfeld als auch als Wechselfeld ausgebildet sein.

Nach Ausgestaltung der Erfindung kann das Magnetsystem aus Permanentmagneten, aus normalleitenden oder supraleitenden Spulen oder aus einer Kombination der genannten Elemente bestehen. Ferner kann das Magnetsystem Komponenten aus magnetleitendem Material sowie aus Ferrofluiden enthalten, die eine gezielte Formung des magnetischen Primärfeldes ermöglichen.

Bei der Steuergröße kann es sich beispielsweise um den Abstand zwischen dem Magnetsystem und der zu inspizierenden Substanz, um die Rotationsgeschwindigkeit des Magnetsystems, um die Stärke des Magnetfeldes oder um den Öffnungswinkel eines Halbachzylinders handeln. Halbachzylinder sind spezielle Anordnungen von Permanentmagneten, die durch eine besonders hohe Intensität und Homogenität des in ihnen herrschenden Magnetfeldes charakterisiert sind. Eine nähere Erläuterung dazu folgt in der Figurenbeschreibung.

Das Magnetsystem ist durch sogenannte Zustandparameter charakterisiert, von denen sich mindestens einer bei festgehaltener Steuergröße unter dem Einfluss der Lorentzkraft ändert. Das heißt, unter dem Einfluss der Lorentzkräfte wirken verschiedene Kräfte und Momente auf das Magnetsystem, welche eine Bewegung und/oder Verformung des Magnetsystems verursachen, die dann messbar sind.

Ein Zustandsparameter kann beispielsweise eine Komponente eines dreidimensionalen Verschiebungsvektors sein, welcher die Translation des Magnetsystems als Ganzes unter dem Einfluss der Lorentzkraft beschreibt.

Ein weiterer Zustandsparameter kann eine Komponente eines dreidimensionalen Drehvektors sein, welcher die Rotation des Magnetsystems als Ganzes durch die von den Lorentzkräften hervorgerufenen Drehmomente beschreibt.

Ferner können die Zustandsparameter innere Spannungen sowie elastische Deformationen des Magnetsystems umfassen.

Die Inspektion der elektrisch leitfähigen Substanz erfolgt, indem einer oder mehrere Zustandsparameter gemessen und ausgewertet werden. Dabei ist in dem erfindungsgemäßen Verfahren zwischen einem Überwachungsmodus und einem Erkundungsmodus zu unterscheiden.

Im Überwachungsmodus werden die Steuergrößen festgehalten und mindestens ein, vorzugsweise mehrere Zustandsparameter als Funktion der Zeit gemessen. Daraus lassen sich einzelne Eigenschaften der zu inspizierenden Substanz, wie beispielsweise Durchflussrate, mittlere elektrische Leitfähigkeit oder Füllstand in einem durchflossenen Kanal, Rohr, Rinne oder dgl. als Funktion der Zeit bestimmen. Der Überwachungsmodus ist die Grundfunktion des Lorentzkraft-Anemometers.

Der Erkundungsmodus stellt eine Erweiterung des erfindungsgemäßen Verfahrens dar, die nicht nur die Bestimmung einzelner Eigenschaften, sondern die vollständige Ermittlung einer räumlichen Verteilung der Eigenschaften, wie Strömungsgeschwindigkeit und elektrische Leitfähigkeit in der zu inspizierenden Substanz erlaubt. Im Erkundungsmodus wird vorzugsweise mithilfe eines Aktuatorsystems mindestens eine Steuergröße in definierter Weise variiert und gleichzeitig mindestens ein Zustandsparameter gemessen.

Ist eine Querschnittsform der zu inspizierenden Substanz bekannt, so kann der Zusammenhang zwischen gemessenen und gesuchten Größen in einer für den Fachmann geläufigen Weise ausgehend von der Grundgleichung der Magnetohydrodynamik berechnet werden.

In der Praxis ist die Form des tatsächlich durchflossenen Querschnitts häufig nicht genau bekannt, weil sich dieser durch Erosionsprozesse oder durch Ablagerung von Schlacke im Rohr im Laufe der Zeit ändert. Deshalb ist bei dem erfindungsgemäßen Lorentzkraft-Anemometer ein Umschalten vom Überwachungsmodus in den Erkundungsmodus vorgesehen.

Ebenso ist es denkbar, im Überwachungsmodus laufend mindestens zwei Zustandsparameter zu messen und durch die Lösung eines inversen Problems auf bestimmte Eigenschafts-änderungen zu schließen.

Durch die Lösung des inversen Problems werden aus den gemessenen Zustandsparametern Feldgrößen, wie beispielsweise ein Geschwindigkeitsprofil einer Strömung, eine Kontur einer durchströmten Rinne oder die Lage und Form eines Risses in einem Festkörper ermittelt.

Die Lösung des inversen Problems erfolgt mittels der Methode der kleinsten Fehlerquadrate. Dabei wird als zu minimierendes Funktional die mittlere quadratische Abweichung der durch die angenommene Verteilung der Eigenschaften, wie elektrischer Leitfähigkeit und Strömungsgeschwindigkeit, berechneten Zustandsparameter von den jeweils gemessenen Zustandsparametern benutzt.

Weitere Einzelheiten und Vorteile der Erfindung ergeben sich aus den folgenden, anhand von Figuren erläuterten Ausführungsbeispielen. Es zeigen:
- Fig. 1 -: eine erste Ausführungsform eines Lorentzkraft-Anemometers mit einem statischen und homogenen Primärfeld;
- Fig. 2 -: eine zweite Ausführungsform des Lorentzkraft- Anemometers mit einem Magnetsystem zur Erzeugung eines statischen und inhomogenen Primärfeldes;
- Fig. 3 -: ein Magnetsystem einer dritten Ausführungsform mit statischem inhomogenen Primärfeld im Erkundungsmodus;
- Fig. 4 -: eine vierte Ausführungsform des Lorentzkraft-Anemometers mit einem rotierenden Primärfeld;
- Fig. 5 -: eine fünfte Ausführungsform des Lorentzkraft-Anemometers mit einem statischen Primärfeld und zweigeteiltem Magnetsystem;
- Fig. 6 -: eine sechste Ausführungsform des Lorentzkraft-Anemometers mit einem Magnetsystems in Form eines aufklappbaren Halbachzylinders.

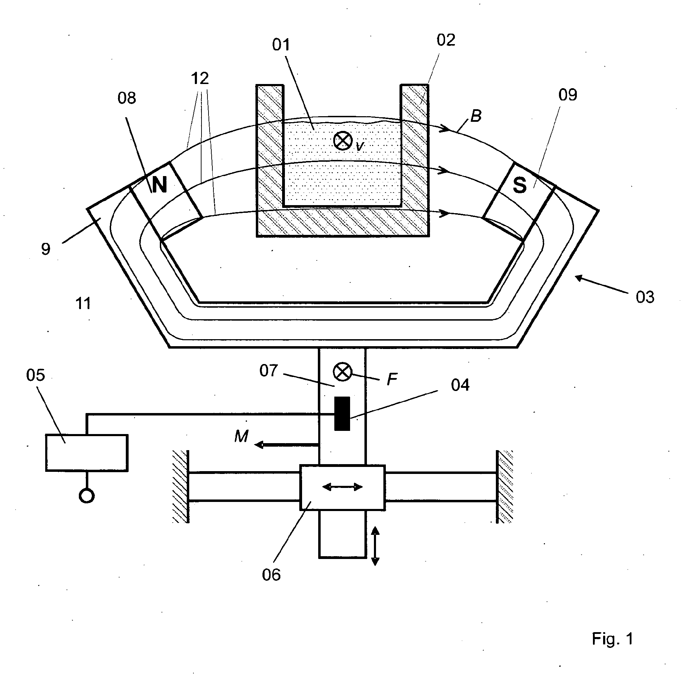

Fig. 1 zeigt eine erste bevorzugte Ausführungsform eines erfindungsgemäßen Lorentzkraft-Anemometers zur berührungslosen Inspektion einer Substanz 01, welche in einem Kanal 02 (nachfolgend auch als Rinne bezeichnet) strömt. Die Strömungsrichtung der Substanz 01 ist mit dem Vektor v angegeben. Das Lorentzkraft-Anemometer umfasst ein Magnetsystem 03, ein Messsystem 04, eine Auswerteeinheit 05 und ein Aktuatorsystem 06. In einer gemeinsamen Halterung 07 sind Magnetsystem 03, Auswerteeinheit 05 und Aktuatorsystem 06 angeordnet.

Das Magnetsystem 03 umfasst mindestens zwei gegenüberliegend, außerhalb der Rinne 02 angeordnete Permanentmagneten 08, 09 und ein Joch 11 aus einem magnetisch leitendem Material. Es dient zur Erzeugung eines Primärfeldes B, welches durch dessen Feldlinien 12 dargestellt ist.

In die Halterung 07 ist das, vorzugsweise mehrere Dehnmessstreifen enthaltende Messsystem 04 integriert, welches die Zustandsparameter der Substanz 01 misst. Die Zustandsparameter sind vorzugsweise jeweils drei Komponenten der Kraft F und des Drehmomentes M, die auf das Magnetsystem 03 bzw. die Halterung 07 aufgrund der Lorentzkräfte wirken.

Die Funktionsweise eines solchen Messsystems 04 entspricht der einer Windkanalwaage, welche beispielsweise in der Aerodynamik breite Anwendung findet. Das Messsystem 04 kann somit in einer für den Fachmann geläufigen Weise ausgelegt und konstruiert werden.

Im Überwachungsmodus ist das Magnetsystem 03 ortsfest zur Rinne 02 angeordnet. Aus den vorzugsweise sechs gemessenen Zustandsparametern werden dann in der Auswerteeinheit 05 maximal sechs Eigenschaften der zu inspizierenden Substanz 01, wie zum Beispiel Durchflussrate, Füllhöhe, durchströmter Querschnitt, Scherrate, Neigung und mittlere elektrische Leitfähigkeit als Funktionen der Zeit berechnet.

Es liegt selbstverständlich im Rahmen der Erfindung, bei Bedarf nur eine Teilmenge der sechs Zustandsparameter, etwa nur die in Hauptströmungsrichtung wirkende Kraft, zu messen und auszuwerten.

In der dargestellten Ausführungsform ist das Magnetsystem 03 durch das vorzugsweise mit Schrittmotoren ausgestattete Aktuatorsystem 06 in verschiedenen Lagen positionierbar. Dadurch kann der Erkundungsmodus ausgeführt werden. Im Erkundungsmodus wird das Magnetsystem 03 nacheinander an verschiedenen definierten Orten positioniert und/oder das Primärfeld definiert verändert. An jedem dieser Orte bzw. bei jeder Veränderung erfolgt eine Messung der Zustandsparameter (sechs Kraft - und Drehmomentkomponenten).

Durch die Lösung eines inversen Problems wird daraus in der Auswerteeinheit 05 sowohl das Profil der gewünschten Eigenschaft, vorzugsweise die Strömungsgeschwindigkeit als auch das Profil der elektrischen Leitfähigkeit der Substanz 01 berechnet. Aus Letzterem ergibt sich die Form der Rinne 02 und die Form der freien Oberfläche der Substanz 01.

Das erfindungsgemäße Lorentzkraft-Anemometer mit Erkundungsmodus erlaubt es somit, eine Durchflussmessung selbst dann durchzuführen wenn die Strömungsgeometrie nicht genau bekannt ist. Der Erkundungsmodus macht ferner eine genaue, vorbestimmte Positionierung des Lorentzkräft-Anemometers bezüglich der zu inspizierenden Substanz 01 überflüssig und erhöht somit die Flexibität des Systems und macht den Einsatz aufwändiger Positioniersysteme überflüssig.

Anstelle der Anwendung von Dehnmessstreifen im Messsystem 04 kann es vorteilhaft sein, die Kraft- und Momentmessung mittels optischer Methoden oder mittels eines Kompensationsverfahrens durchzuführen.

An dieser Stelle sei zur Klarheit nochmals darauf hingewiesen, dass es sich bei der Substanz auch um ein festes Bauteil handeln kann, welches im Primärfeld bewegt wird. Die Führung des Bauteils kann in herkömmlicher Weise durch Lager oder dergleichen erfolgen, welch die Funktion der Rinne übernehmen.

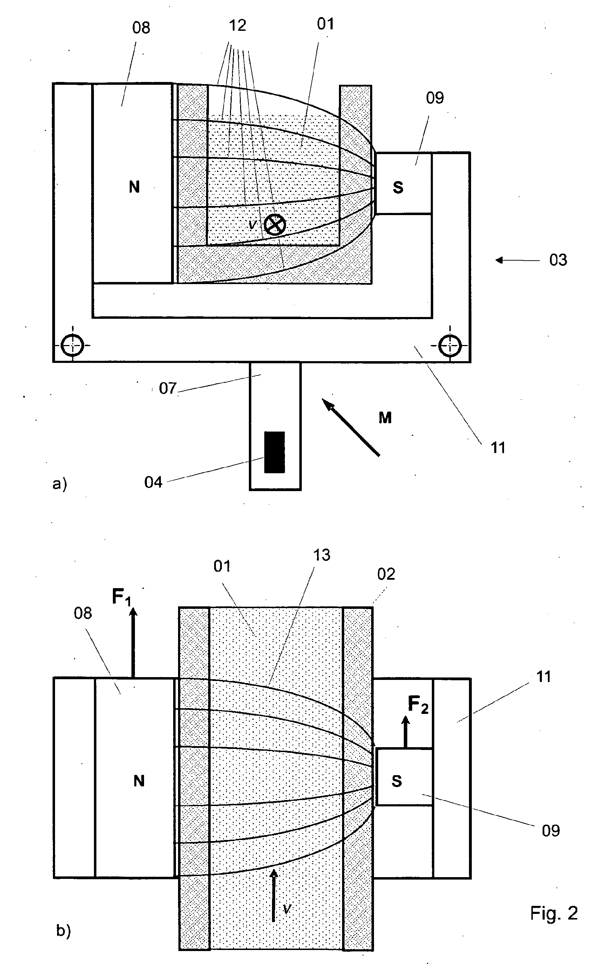

Fig. 2 zeigt eine zweite Ausführungsform eines Lorentzkraft-Anemometers. In dieser Ausführungsform ist das Magnetsystem 03 unsymmetrisch und damit das Primärfeld B inhomogen gestaltet. Die gegenüberliegenden Permanentmagnete 08, 09 haben verschiedene Größen und/oder verschiedene Magnetisierungsstärken. Die inhomogene Auslegung des Magnetfeldes B besitzt den Vorteil, dass sämtliche Komponenten der auf das Magnetsystem 03 wirkenden Kraft F und des Drehmoments M (also alle Zustandsparameter) von Null verschieden sind und damit ein maximaler Informationsgewinn über die Substanz 01 erzielt wird.

Dieser Umstand ist in Abb. a der Fig. 2 durch Darstellung des Richtungsvektors des auf das Magnetsystem 03 wirkenden Drehmoments M verdeutlicht. Im Gegensatz dazu ist beispielsweise die vertikale Kraftkomponente bei dem in Fig. 1 dargestellten System auf Grund der Links-rechts-Symmetrie gleich Null und trägt nicht zum Informationsgewinn bei.

Abb. b der Fig. 2 zeigt eine Draufsicht auf das Lorentzkraft-Anemometer der zweiten Ausführungsform. Zu erkennen sind die verschieden großen wirkenden Kraftkomponenten F₁ und F₂, sowie der Geschwindigkeitsvektor v der Substanz 01.

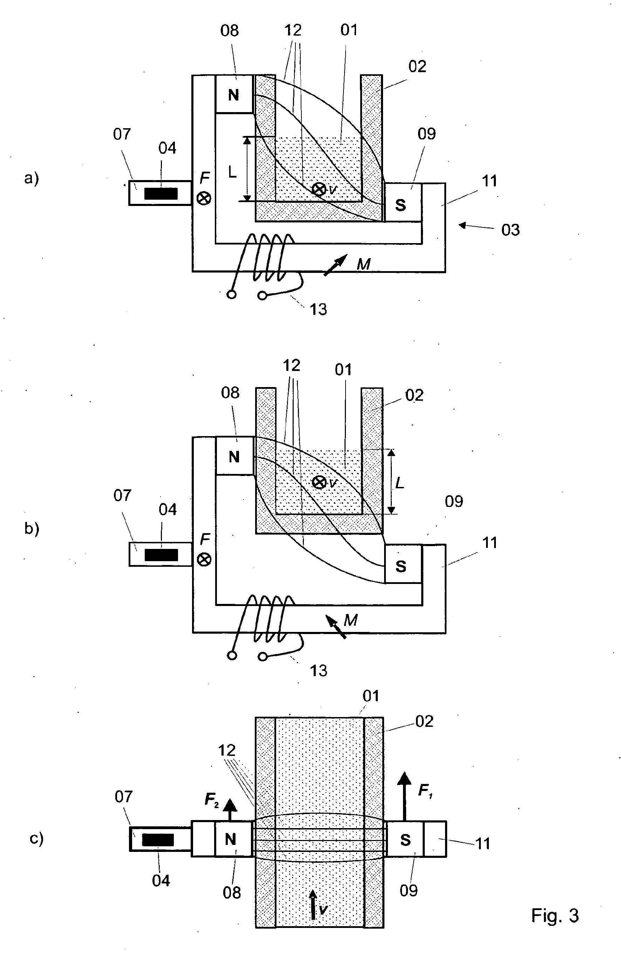

Fig. 3 zeigt in einer dritten Ausführungsform eines erfindungsgemäßen Lorentzkraft-Anemometers ein Magnetsystem 03 mit inhomogenem magnetischem Primärfeld B im Erkundungsmodus. In den Abb. a und b sind unterschiedliche Positionen des MagnetSystems 03 relativ zur Substanz 01 dargestellt, Abb. c zeigt eine Draufsicht der Abb. a. Das Magnetsystem 03 weist zwei aus Permanentmagneten 08, 09 bestehenden Pole auf, die horizontal gegeneinander versetzt angeordnet und durch das Joch 11 miteinander magnetisch verbunden sind. Hierdurch entsteht ein inhomogenes Primärfeld *B*, welches durch die eingezeichneten Feldlinien 12 dargestellt ist. Das gesamte Magnetsystem 03 lässt sich mithilfe des nicht dargestellten Aktuatorsystems 06 vertikal verschieben. Das Joch 11 ist zumindest abschnittsweise von einer Spule 13 umschlossen. Durch die Größe des Stromflusses in der Spule 13 kann die Stärke des von den Permanentmagneten 08, 09 und der Spule 13 erzeugten Primärfeldes *B* variiert werden.

Das in Fig. 3 dargestellte Magnetsystem 03 besitzt zwei Steuergrößen für den Erkundungsmodus, nämlich die durch Translation veränderbare vertikale Lage *L* und die durch Variation der Stromstärke in der Spule 13 veränderbare Stärke des magnetischen Primärfeldes *B.*

Befindet sich das Magnetsystem 03 in der in Abb. a und c der Fig. 3 dargestellten oberen Lage, so wirkt auf den in Abb. a rechts unten liegenden Permanentmagneten 09 eine größere Lorentzkraft F₁, als auf den links oben liegenden Permanentmagneten 08 (Kraft F₂). Das auf das gesamte Magnetsystem 03 wirkende Drehmoment *M* zeigt in diesem Fall nach rechts oben, so wie durch den Vektorpfeil *M* in Abb. a dargestellt.

Befindet sich das Magnetsystem 03, wie in Fig. b der Fig. 3 gezeigt, in der unteren Lage, so wirkt auf den in dieser Abbindung links oben liegenden Permanentmagneten 08 eine größere Lorentzkraft als auf den rechts unten liegenden Permanentmagneten 09 und die Richtung des Drehmoments M ändert sich dementsprechend.

Im Erkundungsmodus werden nun durch die in das Messsystem 04 integrierten Dehnmessstreifen die auf das Magnetsystem 03 wirkenden Zustandsparameter (Kraft- und Drehmomentkomponenten) gemessen, und zwar an einer Mehrzahl von vertikalen Positionen L des Magnetsystems 03 und für eine Mehrzahl von Stromstärken des durch die Spule 13 fließenden Stromes. Soll eine Verteilung der Eigenschaften auch über eine bestimmte Länge des Kanals bzw. der Rinne 02 ermittelt werden, so kann dies durch eine entsprechende Positionierung des Magnetsystem an einer zweiten oder mehreren Stellen des Kanals 02 erfolgen.

Aus den gemessenen Zustandsparametern berechnet die nicht dargestellte Auswerteeinheit wiederum durch die Lösung eines inversen Problems das Profil der Strömungsgeschwindigkeit *v* und der elektrischen Leitfähigkeit der Substanz 01. Da die elektrische Leitfähigkeit an der Grenze zwischen zu inspizierender Substanz 01 und Rinnenwand eine Diskontinuität besitzt, ergibt sich damit auch die Form der Rinne 02.

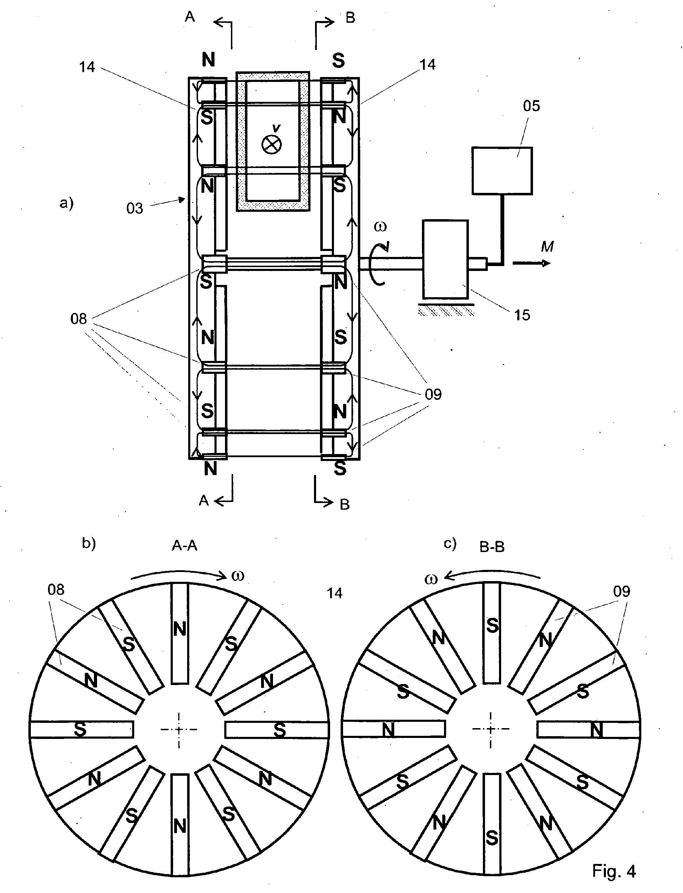

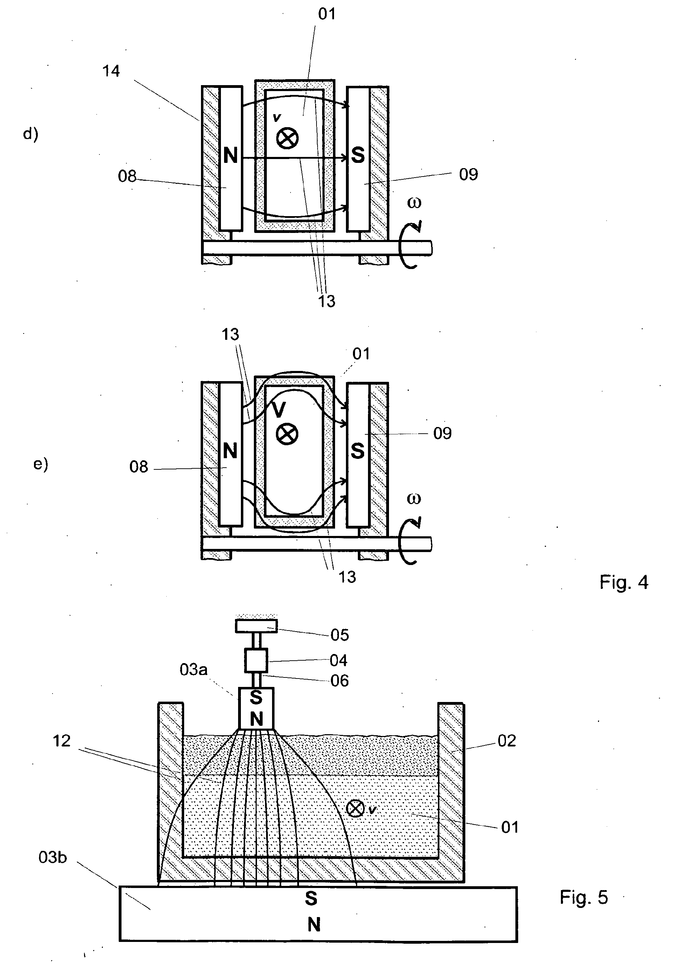

Fig. 4 zeigt eine vierte Ausführungsform des Lorentzkraft-Anemometers mit einem rotierenden Primärfeld *B.* Das Magnetsystem 03 umfasst in diesem Fall zwei gegenüberliegende, miteinander verbundene Scheiben 14 aus magnetisch leitendem Material, welche das Joch bilden, in die eine Vielzahl von Permanentmagneten 08, 09 mit alternierender Polarität eingelassen oder aufgeklebt sind (Abb. b und c).

Die Scheiben 14 sind gegenüberliegend so angeordnet, dass jeweils einem magnetischen Nordpol eines Permanentmagneten 08 ein magnetischer Südpol eines Permanentmagneten 09 gegenüberliegt.

Im Überwachungsmodus wird das Magnetsystem 03 durch die von der bewegten Substanz 01 erzeugte Lorentzkraft in Rotation versetzt und die Drehzahl ω mittels eines Drehzahlmessgerätes 15 kontinuierlich gemessen. Aus der gemessenen Drehzahl ω berechnet die Auswerteeinheit 05 die gesuchte Eigenschaft der Substanz 01, beispielsweise die Durchflussrate.

Es liegt auch im Rahmen der Erfindung, anstelle des Drehzahlmessgerätes 15 einen Motor mit integriertem Drehmomentmesssystem zu installieren. Im Überwachungsmodus rotiert dann der Motor mit einer definierten Drehzahl. Gleichzeitig wird das von ihm erzeugte Drehmoment gemessen und aus ihm in der Auswerteeinheit 05 die gesuchte Eigenschaft der Substanz 01, zum Beispiel die Durchflussrate berechnet.

Im Erkundungsmodus bildet die Drehzahl ω des in Fig. 4 dargestellten Magnetsystems 03 die Steuergröße, während das Drehmoment *M* den Zustandsparameter verkörpert. Ist die Drehzahl (ω klein, so dringen die Magnetfeldlinien 12 vollständig in die zu inspizierende Substanz 01 ein (Abb. d der Fig. 4).

*Ist* die Drehzahl ω hingegen groß (Abb. e der Fig. 4), so werden die Magnetfeldlinien 12 auf Grund des Skineffektes aus der Substanz 01 herausgedrängt und durchziehen nur die wandnahen Bereiche der Substanz 01. Somit kann durch eine Variation der Drehzahl ω die Verteilung des Primärfeldes *B* am Ort der zu inspizierenden Substanz 01 gezielt beeinflusst werden.

Im Erkundungsmodus wird durch das im Motor integrierte Messsystem das auf das Magnetsystem 03 wirkende Drehmoment *M* für eine Mehrzahl von Drehzahlen ω₁gemessen. Aus diesen berechnet die Auswerteeinheit 05 wieder durch Lösung eines inversen Problems das Profil der Strömungsgeschwindigkeit und der elektrischen Leitfähigkeit der Substanz 01.

In Fig. 5 ist eine fünfte Ausführungsform des Lorentzkraft-Anemometers gezeigt. Das Magnetsystem 03 ist zweigeteilt und umfasst eine aktive Komponente 03a und eine passive Komponente 03b . Die passive Komponente 03b des Magnetsystems 03 ist unterhalb der zu inspizierenden Substanz 01 ortsfest angeordnet, während die aktive Komponente 03a des Magnetsystems 03 oberhalb der Substanz 01 positioniert ist. Die Substanz 01 ist mit einer.Schlackeschicht überzogen.

Im Überwachungsmodus ist auch die aktive Komponente 03a ortsfest. Durch Messung bzw. Aufzeichnung einer oder mehrerer auf die aktive Komponente 03a des Magnetsystems 03 wirkenden Zustandsparameter (Kraft- und Drehmomentkomponenten) mittels des Messsystems 04 als Funktion der Zeit wird in der Auswerteeinheit 05 die gesuchte Eigenschaft der Substanz, zum Beispiel die Durchflussrate berechnet.

Im Erkundungsmodus wird die Lage der aktiven Komponente 03a relativ zur Substanz 01 und zur passiven Komponente 03b mittels des Aktuatorsystems 06 in definierter Weise verändert und gleichzeitig die auf die aktive Komponente 03a des Magnetsystems 03 wirkenden Kraft- und Drehmomentkomponenten mittels des Messsystems 04 gemessen. Durch Lösung eines inversen Problems werden daraus in der Auswerteeinheit 05 die Profile von Geschwindigkeit v und elektrischer Leitfähigkeit der Substanz berechnet.

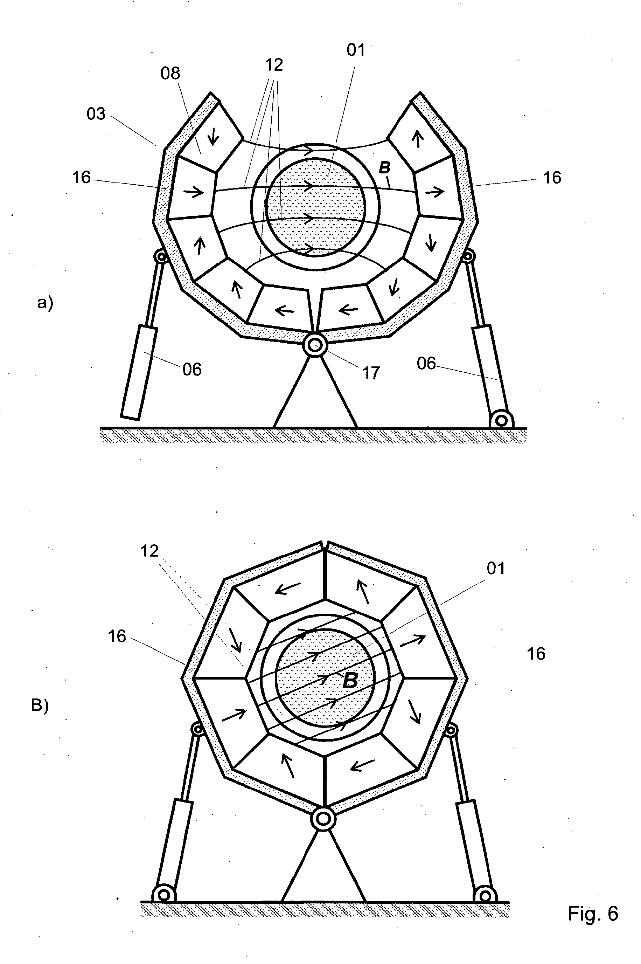

Fig. 6 zeigt in einer sechsten Ausführungsform eines Lorentzkraft-Anemometers ein Magnetsystem 03, welches als aufklappbarer Halbachzylinder ausgeführt ist. In dieser Ausführungsform sind die Permanentmagnete 08, 09 an einem aus zwei Halbschalen 16 bestehenden Gehäuse befestigt sind. Die Halbschalen 16 sind mittels eines Scharniers 17 miteinander verbunden und können mittels des Aktuatorsystems 06 geöffnet und geschlossen werden.

Im geöffneten Zustand (Abb. a der Fig. 6) ist das Magnetsystem 03 abnehmbar und erzeugt in der zu inspizierenden Substanz 1 ein inhomogenes Magnetfeld B. Im geschlossenen Zustand (Abb. 6b) ist das Magnetfeld B homogen und besitzt einen maximalen Wert.

Es liegt selbstverständlich auch im Rahmen der Erfindung, den Öffnungswinkel des Halbachzylinders im Erkundungsmodus kontinuierlich zu variieren.

Im Überwachungsmodus wird der Öffnungswinkel des Halbachzylinders konstant gehalten und wiederum werden die auf ihn wirkenden Kraft- und/oder Drehmomentkomponenten als Zustandsparameter nach den in den vorangegangenen Ausführungsbeispielen beschriebenen Messmethoden als Funktion der Zeit ermittelt.

Im Erkundungsmodus werden die auf das Magnetsystem 03 wirkende Kraft- und Drehmomentkomponenten für eine Mehrzahl von Öffnungswinkeln des Halbachzylinders gemessen und in der nicht dargestellten Auswerteeinheit wieder durch die Lösung eines inversen Problems zur Berechnung der Profile von Strömungsgeschwindigkeit und elektrischer Leitfähigkeit der zu inspizierenden Substanz herangezogen.

### Bezugszeichenliste

- 01: elektrisch leitfähige Substanz
- 02: Kanal/Rinne
- 03: Magnetsystem
- 03a: aktive Komponente des Magnetsystems
- 03b: passive Komponente des Magnetsystems
- 04: Messsystem
- 05: Auswerteeinheit
- 06: Aktuatorsystem
- 07: Halterung
- 08: Permanentmagnet
- 09: Permanentmagnet
- 10: -
- 11: Joch
- 12: Feldlinien
- 13: Spule
- 14: Scheibe
- 15: Drehzahlmessgerät
- 16: Halbschale
- 17: Scharnier

- *v*: Strömungsgeschwindigkeit
- *B*: magnetisches Primärfeld
- *F*: Kraft
- *M*: Drehmoment
- ω: Drehzahl

## Patentansprüche

1. Verfahren zur berührungslosen Bestimmung von leitfähigkeitsbeeinflussenden Eigenschaften einer in einem magnetischen Primärfeld (*B*) bewegten elektrisch leitfähigen Substanz (01), folgende Schritte umfassend:
- Einkoppeln des magnetischen Primärfeldes (*B*) in die zu inspizierende Substanz (01) mittels eines Magnetsystems (03) mit mindestens zwei Polen, wobei die im Luftspalt zwischen diesen Polen verlaufenden Feldlinien (12) des Primärfeldes (*B*) die Substanz (01) durchdringen und im Wesentlichen quer zur Bewegungsrichtung der Substanz (01) verlaufen;
- Messen mehrerer mechanischer Zustandsparameter des Magnetsystems (03), welche durch die Einwirkung eines Sekundärfeldes auf das Magnetsystem (03) veränderlich sind und aus der folgenden Gruppe ausgewählt sind:
- Komponenten eines dreidimensionalen Verschiebungsvektors,
- Komponenten eines dreidimensionalen Drehvektors,
- innere Spannungen,
- elastische Deformationen,
wobei das Sekundärfeld aufgrund von in der Substanz (01) durch das Primärfeld (*B*) induzierten Wirbelströmen entsteht;
- Berechnung mindestens einer der leitfähigkeitsbeeinflussenden Eigenschaften der Substanz (01) unter Verwendung der Methode der kleinsten Fehlerquadrate, wobei als zu minimierendes Funktional die mittlere quadratische Abweichung der durch die angenommene räumliche Verteilung dieser Eigenschaften der zu inspizierenden Substanz (01) berechneten Zustandsparameter von den jeweils gemessenen Zustandsparametern benutzt wird.

2. Verfahren nach Anspruch 1, **dadurch gekennzeichnet, dass** mit der Durchführung der folgenden Schritte zusätzlich eine Bestimmung der räumlichen Verteilung der leitfähigkeitsbeeinflussenden Eigenschaften der Substanz (01) erfolgt:
- Veränderung der Form und/oder Stärke des die Substanz (01) durchsetzenden magnetischen Primärfeldes (*B*);
- Messen der mechanischen Zustandsparameter des Magnetsystems (03) zu jeder Veränderung des Primärfeldes (*B*);
- Berechnung der räumlichen Verteilung der leitfähigkeitsbeeinflussenden Eigenschaften der zu inspizierenden Substanz (01) über deren gesamten Querschnitt unter Verwendung der Methode der kleinsten Fehlerquadrate, wobei als zu minimierendes Funktional die mittlere quadratische Abweichung der durch die angenommene räumliche Verteilung dieser Eigenschaften berechneten Zustandsparameter von den jeweils gemessenen Zustandsparametern benutzt wird.

3. Verfahren nach Anspruch 2, **dadurch gekennzeichnet, dass** eine Bestimmung der räumlichen Verteilung der Eigenschaften auch über eine bestimmte Länge der Substanz in deren axialer Bewegungsrichtung ermittelt wird, indem die genannten Verfahrensschritte an mindestens zwei axial voneinander entfernten Stellen der Substanz (01) ausgeführt werden.

4. Verfahren nach einem der Ansprüche 1 bis 3, **dadurch gekennzeichnet, dass** die Zustandsparameter des Magnetsystems (03) dreidimensionale Komponenten der Kraft (*F*) und/oder des Drehmomentes (*M*) sind, welche aufgrund des durch in der Substanz (01) induzierte Wirbelströme verursachten Sekundärfeldes auf das Magnetsystem (03) wirken.

5. Verfahren nach einem der Ansprüche 1 bis 4, **dadurch gekennzeichnet, dass** die Zustandsparameter des Magnetsystems (03) aus im Magnetsystem auftretenden mechanischen Spannungen bestimmt werden.

6. Verfahren nach einem der Ansprüche 2 bis 5, **dadurch gekennzeichnet, dass** die Form und/oder Stärke des magnetischen Primärfeldes (*B*) durch eine Lageveränderung des Magnetsystems (03) relativ zu der zu inspizierenden Substanz (01) verändert wird.

7. Verfahren nach einem der Ansprüche 2 bis 6, **dadurch gekennzeichnet, dass** die Stärke des magnetischen Primärfeldes (B) durch Änderung eines Stromes verändert wird, der eine Spule (13) durchfließt, welche zumindest einen Teil des Magnetsystems (03)umschließt.

8. Verfahren nach einem der Ansprüche 1 bis 7, **dadurch gekennzeichnet, dass** die Substanz (01) ein elektrisch leitfähiger Festkörper ist, und dass als zu bestimmende Eigenschaft Lage und/oder Form einer Inhomogenität im Festkörper ermittelt werden.

9. Verfahren nach einem der Ansprüche 1 bis 8, **dadurch gekennzeichnet, dass** die Eigenschaften einer flüssigen Substanz (01) bestimmt werden, die in einem Kanal (02) oder dergleichen bewegt wird, welcher sich quer zu den im Luftspalt verlaufenden Feldlinien erstreckt.

10. Lorentzkraft-Anemometer zur berührungslosen Bestimmung von leitfähigkeitsbeeinflussenden Eigenschaften einer in einem Kanal (02) bewegten elektrisch leitfähigen Substanz (01) mit
- einem Magnetsystem (03) zur Erzeugung eines Primärfeldes (B);
- einem Messsystem (04) zur Erfassung von mindestens zwei mechanischen Zustandsparametern, nämlich einer Bewegung und/oder einer Verformung des Magnetsystems (03), welche die mechanische Wirkung eines Sekundärfeldes auf das Magnetsystem (03) charakterisieren und aus der folgenden Gruppe ausgewählt sind:
- Komponenten eines dreidimensionalen Verschiebungsvektors,
- Komponenten eines dreidimensionalen Drehvektors,
- innere Spannungen,
- elastische Deformationen,
wobei das Sekundärfeld aufgrund der im Primärfeld bewegten Substanz (01) durch in der Substanz (01) induzierte Wirbelströme entsteht;
- einer Auswerteeinheit (05) zur Bestimmung der leitfähigkeitsbeeinflussenden Eigenschaften der Substanz (01) aus den gemessenen Zustandsparametern;
**dadurch gekennzeichnet, dass** das Magnetsystem ein Joch (11) und zumindest zwei magnetische Pole umfasst, zwischen denen ein Luftspalt ausgebildet ist und die an im Wesentlichen gegenüberliegenden Seiten des Querschnitts des Kanals (02) anzuordnen sind, und dass die Auswerteeinheit (05) dazu eingerichtet ist, ein Verfahren zur Bestimmung der leitfähigkeitsbeeinflussenden Eigenschaften der Substanz (01) gemäß einem der Ansprüche 1 bis 9 auszuführen.

11. Lorentzkraft-Anemometer nach Anspruch 10, **dadurch gekennzeichnet, dass** es weiterhin ein Aktuatorsystem (06) umfasst, welches derart an das Magnetsystem (03) angekoppelt ist, dass es eine relative Lageveränderung des Magnetsystems (03) zur Substanz (01) gestattet, wodurch im Querschnitt der Substanz (01) eine Veränderung der Form und/oder Stärke des magnetischen Primärfeldes (*B*) erreicht wird.

12. Lorentzkraft-Anemometer nach Anspruch 10 oder 11, **dadurch gekennzeichnet, dass** die Pole durch Permanentmagnete (08, 09) gebildet sind, die eine unterschiedliche Stärke und/oder Größe aufweisen, so dass ein inhomogenes Primärfeld (*B*) gebildet wird.

13. Lorentzkraft-Anemometer nach Anspruch 10 oder 11, **dadurch gekennzeichnet, dass** die Pole des Magnetsystems (03) durch normal- oder supraleitende Spulen oder durch eine Kombination solcher Spulen mit Permanentmagneten (08, 09) gebildet sind.

14. Lorentzkraft-Anemometer nach Anspruch 10 oder 11, **dadurch gekennzeichnet, dass** die Pole des Magnetsystems (03) durch zwei gegenüberliegend angeordnete Scheiben (14) mit darauf angeordneten Permanentmagneten (08, 09) mit alternierender Polung gebildet sind, wobei die Scheiben (14) durch ein Joch (11) verbunden und durch einen Antrieb mit variabler Geschwindigkeit ω rotierbar ist.

15. Lorentzkraft-Anemometer nach einem der Ansprüche 10 bis 14, **dadurch gekennzeichnet, dass** das Magnetsystem (03) magnetisch leitendes Material und Ferrofluide zur Formung des magnetischen Primärfeldes umfasst.

## Claims

1. A method for the contact-free determination of conductivity-influencing characteristics of an electrically conductive substance (01), which is moved in a primary magnetic field (*B*), comprising the following steps:
- coupling the primary magnetic field (*B*) into the substance (01), which is to be inspected, by means of a magnetic system (03) comprising at least two poles, wherein the field lines (12) of the primary field (*B*), which run in the air gap between these poles, permeate the substance (01) and substantially run at right angles to the direction of movement of the substance (01);
- measuring a plurality of mechanical state parameters of the magnetic system (03), which can be varied due to the impact of a secondary field on the magnetic system (03), and which are chosen from the following group:
- components of a three-dimensional displacement vector,
- components of a three-dimensional rotational vector,
- inner tensions,
- elastic deformations,
wherein the secondary field is created due to the eddy currents, which are induced in the substance (01) by means of the primary field (*B*);
- calculating at least one of the conductivity-influencing characteristics of the substance (01) using the method of least squares, wherein the average square deviation of the state parameters, which are calculated by means of the assumed spatial distribution of these characteristics of the substance (01) that is to be inspected, from the respective measured state parameters is used as functional, which is to be minimized.

2. The method according to claim 1, **characterized in that** a determination of the spatial distribution of the conductivity-influencing characteristics of the substance (01) is carried out additionally by carrying out the following steps:
- varying the form and/or intensity of the primary magnetic field (*B*), which permeates the substance (01);
- measuring the mechanical state parameters of the magnetic system (03) for each variation of the primary field (*B*);
- calculating the spatial distribution of the conductivity-influencing characteristics of the substance (01), which is to be inspected, via the total cross section thereof using the method of least squares, wherein the average square deviation of the state parameters, which are calculated by means of the assumed spatial distribution of these characteristics from the respective measured state parameters is used as functional, which is to be minimized.

3. The method according to claim 2, **characterized in that** a determination of the spatial distribution of the characteristics is also determined via a certain length of the substance in the axial direction of movement thereof, **in that** the mentioned method steps are carried out on at least two locations of the substance (01), which are axially spaced apart from one another.

4. The method according to one of claims 1 to 3, **characterized in that** the state parameters of the magnetic system (03) are three-dimensional components of the force (*F*) and/or of the torque (*M*), which act on the magnetic system (03) due to the secondary field, which is caused by the eddy currents, which are induced in the substance (01).

5. The method according to one of claims 1 to 4, **characterized in that** the state parameters of the magnetic system (03) are determined from mechanical stresses, which occur in the magnetic system.

6. The method according to one of claims 2 to 5, **characterized in that** the form and/or intensity of the primary magnetic field (*B*) is varied relative to the substance (01), which is to be inspected, by means of a positional variation of the magnetic system (03).

7. The method according to one of claims 2 to 6, **characterized in that** the intensity of the primary magnetic field (*B*) is varied by means of a variation of a current, which flows through a coil (13), which surrounds at least a part of the magnetic system (03).

8. The method according to one of claims 1 to 7, **characterized in that** the substance (01) is an electrically conductive solid body, and that position and/or form of an inhomogeneity are determined in the solid body as the characteristic, which is to be determined.

9. The method according to one of claims 1 to 8, **characterized in that** the characteristics of a liquid substance (01), which is moved in a duct (02) or the like, which extends at right angles to the field lines running in the air gap, are determined.

10. A Lorentz force anemometer for the contact-free determination of conductivity-influencing characteristics of an electrically conductive substance (01), which is moved in a duct (02), comprising
- a magnetic system (03) for generating a primary field (*B*);
- a measuring system (04) for detecting at least two mechanical state parameters, namely a movement and/or a deformation of the magnetic system (03), which characterize the mechanical effect of a secondary field on the magnetic system (03) and which are chosen from the following group:
- components of a three-dimensional displacement vector,
- components of a three-dimensional rotational vector,
- inner tensions,
- elastic deformations,
wherein the secondary field is created due to the substance (01), which is moved in the primary field, by means of the eddy currents, which are induced in the substance (01);
- an evaluation unit (05) for determining the conductivity-influencing characteristics of the substance (01) from the measured state parameters;
**characterized in that** the magnetic system comprises a cross member (11) and at least two magnetic poles, between which an air gap is embodied and which are to be arranged on substantially opposite sides of the cross section of the duct (02), and **in that** the evaluation unit (05) is designed to carry out a method for determining the conductivity-influencing characteristics of the substance (01) according to one of claims 1 to 9.

11. The Lorentz force anemometer according to claim 10, **characterized in that** is furthermore comprises an actuator system (06), which is coupled to the magnetic system (03) such that it allows for a relative positional variation of the magnetic system (03) to the substance (01), whereby a variation of the form and/or intensity of the primary magnetic field (*B*) is obtained in the cross section of the substance (01).

12. The Lorentz force anemometer according to claim 10 or 11, **characterized in that** the poles are formed by permanent magnets (08, 09), which encompass a different intensity and/or size, so that an inhomogeneous primary field (*B*) is formed.

13. The Lorentz force anemometer according to claim 10 or 11, **characterized in that** the poles of the magnetic system (03) are formed by normal or supraconducting coils or by a combination of such coils with permanent magnets (08, 09).

14. The Lorentz force anemometer according to claim 10 or 11, **characterized in that** the poles of the magnetic system (03) are formed by two disks (14), which are located opposite one another and which comprise permanent magnets (08, 09) arranged thereon comprising an alternating polarity, wherein the disks (14) are connected by means of a cross member (11) and can be rotated by means of a drive at a variable speed □.

15. The Lorentz force anemometer according to one of claims 10 to 14, **characterized in that** the magnetic system (03) comprises magnetically conducting material and ferrofluids for forming the primary magnetic field.

## Revendications

1. Procédé pour la détermination sans contact de caractéristiques influençant la conductibilité d'une substance (01) conductrice d'électricité déplacée dans un champ magnétique primaire (*B*), comprenant les étapes suivantes :
- injection du champ magnétique primaire (*B*) dans la substance (01) à inspecter au moyen d'un système d'aimants (03) avec au moins deux pôles, les lignes de champ (12) du champ primaire (*B*) s'étendant dans l'entrefer entre lesdits pôles traversant la substance (01) et s'étendant sensiblement à la transversale du sens de déplacement de la substance (01) ;
- mesure de plusieurs paramètres mécaniques d'état du système d'aimants (03) qui sont modifiables par l'action d'un champ secondaire sur le système d'aimants (03) et qui sont choisis dans le groupe suivant :
- composants d'un vecteur de déplacement tridimensionnel,
- composants d'un vecteur de rotation tridimensionnelle,
- tensions internes,
- déformation élastique,
le champ secondaire naissant suite à des courants de Foucault induits dans la substance (01) par le champ primaire (*B*) ;
- calcul d'au moins l'une des caractéristiques influençant la conductibilité de la substance (01), en utilisant la méthode des plus petits carrés d'erreurs, l'écart quadratique moyen des paramètres d'état calculés par la distribution dans l'espace supposée desdites caractéristiques de la substance (01) à inspecter par rapport aux paramètres d'état respectivement mesurés étant utilisé en tant que fonction à minimiser.

2. Procédé selon la revendication 1, **caractérisé en ce qu'**avec la réalisation des étapes suivantes, il s'effectue en supplément une détermination de la distribution dans l'espace des caractéristiques influençant la conductibilité de la substance (01) :
- modification de la forme et/ou de l'épaisseur du champ magnétique primaire (*B*) traversant la substance (01) ;
- mesure des paramètres mécaniques d'état du système magnétique (03) pour chaque modification du champ primaire (*B*) ;
- calcul de la distribution dans l'espace des caractéristiques influençant la conductibilité de la substance (01) à inspecter sur l'ensemble de la section transversale de cette dernière, en utilisant la méthode des plus petits carrés d'erreurs, l'écart quadratique moyen des paramètres d'état calculés par la distribution dans l'espace supposée desdites caractéristiques par rapport aux paramètres d'état respectivement mesurés étant utilisé en tant que fonction à minimiser.

3. Procédé selon la revendication 2, **caractérisé en ce qu'**une détermination de la distribution dans l'espace des caractéristiques est également recherchée sur une certaine longueur de la substance, dans le sens de déplacement axial de cette dernière, **en ce que** les étapes de procédé citées sont réalisées sur au moins deux points écartés l'un de l'autre en direction axiale de la substance (01).

4. Procédé selon l'une quelconque des revendications 1 à 3, **caractérisé en ce que** les paramètres d'état du système d'aimants (03) sont des composants tridimensionnels de la force (*F*) et/ou du moment du couple (*M*), qui du fait du champ secondaire généré du fait des courants de Foucault induits dans la substance (01) agissent sur le système d'aimants (03).

5. Procédé selon l'une quelconque des revendications 1 à 4, **caractérisé en ce que** les paramètres d'état du système d'aimants (03) sont définis à partir de tensions mécaniques naissant dans le système d'aimants.

6. Procédé selon l'une quelconque des revendications 2 à 5, **caractérisé en ce qu'**on modifié la forme et/ou l'épaisseur du champ magnétique primaire (*B*) par une modification de la position du système d'aimants (03) par rapport à la substance (01) à inspecter.

7. Procédé selon l'une quelconque des revendications 2 à 6, **caractérisé en ce qu'**on modifie l'épaisseur du champ magnétique primaire (*B*) par une modification d'un courant qui traverse une bobine (13) laquelle entoure au moins une partie du système d'aimants (03).

8. Procédé selon l'une quelconque des revendications 1 à 7, **caractérisé en ce que** la substance (01) est un solide conducteur d'électricité et **en ce que** la position et/ou la forme d'un manque d'homogénéité dans le solide sont recherchées en tant que caractéristique à déterminer.

9. Procédé selon l'une quelconque des revendications 1 à 8, **caractérisé en ce qu'**on détermine les caractéristiques d'une substance liquide (01) qui est déplacée dans un canal (02) ou similaire qui s'écoule à la transversale des lignes de champ s'étendant dans l'entrefer.

10. Anémomètre par force de Lorentz pour la détermination sans contact de caractéristiques influençant la conductibilité d'une substance (01) conductrice d'électricité déplacée dans un canal (02), avec
- un système d'aimants (03) pour la création d'un champ primaire (*B*) ;
- un système de mesure (04) pour la détection d'au moins deux paramètres mécaniques d'état, à savoir un déplacement et/ou une déformation du système d'aimants (03) qui caractérisent l'action mécanique d'un champ secondaire sur le système d'aimants (03) et qui sont choisis dans le groupe suivait :
- composants d'un vecteur de déplacement tridimensionnel,
- composants d'un vecteur de rotation tridimensionnelle,
- tensions internes,
- déformation élastique,
le champ secondaire naissant suite à des courants de Foucault induits dans la substance (01) du fait de la substance (01) déplacée dans le champ primaire ;
- une unité d'évaluation (05) pour déterminer les caractéristiques influençant la conductibilité de la substance (01) à partir des paramètres d'état mesurés ;
**caractérisé en ce que** le système d'aimants comprend une culasse (11) et au moins deux pôles magnétiques entre lesquels est conçu un entrefer et qui doivent être disposés sur des côtés sensiblement opposés de la section transversale du canal (02) et **en ce que** l'unité d'évaluation (05) est aménagée pour réaliser un procédé pour la détermination des caractéristiques influençant la conductibilité de la substance (01) selon l'une quelconque des revendications 1 à 9.

11. Anémomètre par force de Lorentz selon la revendication 10, **caractérisé en ce qu'**il comprend par ailleurs un système d'actionneurs (06) qui est accouplé sur le système d'aimants (03) de sorte à permettre une modification relative de la position du système d'aimants (03) par rapport à la substance (01), par laquelle dans la section transversale de la substance (01), on obtient une modification de la forme et/ou de l'épaisseur du champ magnétique primaire (*B*).

12. Anémomètre par force de Lorentz selon la revendication 10 ou la revendication 11, **caractérisé en ce que** les pôles sont formés par des aimants permanents (08, 09) qui présentent une épaisseur et/ou une taille différente, de sorte à former un champ primaire (*B*) non homogène.

13. Anémomètre par force de Lorentz selon la revendication 10 ou la revendication 11, **caractérisé en ce que** les pôles du système d'aimants (03) sont formés par des bobines normalement conductrices ou supraconductrices ou par une association de telles bobines avec des aimants permanents (08, 09).

14. Anémomètre par force de Lorentz selon la revendication 10 ou la revendication 11, **caractérisé en ce que** les pôles du système d'aimants (03) sont formés par deux disques (14) disposés à l'opposée avec des aimants permanents (08, 09) à polarité alternante disposés dessus, les disques (14) étant reliés par une culasse (11) et pouvant être tournés par un entraînement à vitesse ω variable.

15. Anémomètre par force de Lorentz selon l'une quelconque des revendications 10 à 14, **caractérisé en ce que** le système d'aimants (03) comprend une matière magnétiquement conductrice et des ferrofluides pour la création du champ magnétique primaire.
